Europäisches Patentamt

European Patent Office

Office européen des brevets

(11) Veröffentlichungsnummer: **0 016 928**
**B1**

(12) **EUROPÄISCHE PATENTSCHRIFT**

(45) Veröffentlichungstag der Patentschrift:
20.01.82

(21) Anmeldenummer: 80100521.6

(22) Anmeldetag: 02.02.80

(51) Int. Cl.³: **G 01 F 1/10,** G 01 F 1/12

(54) Durchflussmesser mit einem Rotationskörper und Mitteln zur Verbesserung des Anlaufverhaltens des Rotationskörpers.

(30) Priorität: 26.03.79 DE 2911826

(43) Veröffentlichungstag der Anmeldung:
15.10.80 Patentblatt 80/21

(45) Bekanntmachung des Hinweises auf die Patenterteilung:
20.01.82 Patentblatt 82/3

(84) Benannte Vertragsstaaten:
FR GB IT SE

(56) Entgegenhaltungen:
BE-A-709 227
FR-A-1 357 646
FR-A-1 508 672
FR-A-1 538 516
FR-A-2 359 401

(73) Patentinhaber: VDO Adolf Schindling AG,
Gräfstrasse 103, D-6000 Frankfurt/Main (DE)

(72) Erfinder: Werkmann, Karl-Heinz, Goldsteinstrasse 271,
D-6000 Frankfurt/Main (DE)

(74) Vertreter: Könekamp, Herbert, Dipl.-Ing., Sodener
Strasse 9, D-6231 Schwalbach (DE)

## Durchflussmesser mit einem Rotationskörper und Mitteln zur Verbesserung des Anlaufverhaltens des Rotationskörpers

Die Erfindung betrifft einen Durchflussmesser mit einem Rotationskörper, der mindestens eine schraubenlinienförmige Wendel an seinem Aussenumfang aufweist und der in einem Strömungskanal gelagert ist, in dem stromaufwärts zu dem Rotationskörper ein aus in Strömungsrichtung orientierten, im wesentlichen ebenen Wänden bestehender Strömungsgleichrichter angeordnet ist.

Bei einem derartigen bekannten Durchflussmesser sind die schraubenlinienförmigen Wendeln aus einer Aussenwand des annähernd zylindrischen Rotationskörpers ausgeformt. Der Rotationskörper ist in der Regel in zwei Lagern drehbar gelagert, von denen das eine bezüglich des Rotationskörpers stromaufwärts gelagert ist, während das zweite Lager als Gegenlager stromabwärts angeordnet ist. Das Gegenlager nimmt dabei auch eine axiale Druckkraft auf, die durch die Anströmung des Mediums an dem Rotationskörper, insbesondere an dessen Stirnseite gebildet wird.

Für gute messtechnische Eigenschaften dieses Durchflussmessers ist ferner in dem Strömungskanal stromaufwärts zu dem Rotationskörper ein sogenannter Strömungsgleichrichter angeordnet, der in der Regel aus zwei ebenen Wänden besteht, die parallel zur Strömungsrichtung angeordnet sind und die rechtwinklig so zusammengesetzt sind, dass sie im Querschnitt eine Kreuzform bilden.

Derartige Durchflussmesser haben bei verhältnismässig grossen Durchflüssen verhältnismässig günstige messtechnische Eigenschaften, da hier ein linearer Zusammenhang zwischen dem Durchfluss und der Rotationsgeschwindigkeit des Rotationskörpers besteht. Jedoch sind die Kennlinien üblicher Durchflussmesser mit Rotationskörper bei relativ niedrigen Durchflüssen verhältnismässig nichtlinear. Bei ganz geringen Strömungsgeschwindigkeiten gibt der Durchflussmesser überhaupt keine verwertbare Messgrösse ab, da der Rotationskörper nicht anläuft.

Der vorliegenden Erfindung liegt die Aufgabe zugrunde, unter Vermeidung der Nachteile der bekannten Durchflussmesser das Anlaufverhalten bei niedrigem Durchfluss zu verbessern bzw. einen Anlauf trotz geringer Strömung zu ermöglichen und insgesamt den Kennlinienverlauf bei verhältnismässig niedrigen Strömungsgeschwindigkeiten zu verbessern.

Diese Aufgabe wird erfindungsgemäss für einen Durchflussmesser der eingangs genannten Gattung dadurch gelöst, dass die Wände des Strömungsgleichrichters zum Rotationskörper hin zunehmend verdickt sind.

Durch diese Massnahme wird ein besonders guter Anlauf bei geringen Durchflüssen zuverlässig bewirkt. Dies geschieht dadurch, dass die Strömungsgeschwindigkeit im Bereich der verdickten Enden der Wände gegenüber der durchschnittlichen Strömungsgeschwindigkeit in dem Strömungskanal – einem Gehäuse bzw. einer Leitung – vergrössert wird, so dass der Rotationskörper mit verhältnismässig grosser Geschwindigkeit angeströmt wird. Dabei erfolgt die Anströmung verhältnismässig weit aussen, so dass ein entsprechend grosses Drehmoment erzeugt wird. Schliesslich wird durch die Anströmung des Rotationskörpers aussen, d.h. vorwiegend im Bereich der schraubenlienenförmigen Wendel der Druck auf die Stirnseite des Rotationskörpers verringert, der nur noch geringfügig angeströmt wird. Dadurch wird auch die Reibung in dem Gegenlager reduziert. Alle diese Effekte wirken kumulativ zu einem besonders guten Anlauf zusammen.

In Weiterbildung des erfindungsgemässen Durchflussmessers nimmt die Dicke der Wände des Strömungsgleichrichters mit abnehmender Entfernung zum Rotationskörper überproportional zu. Bei dieser Dimensionierung der Wände wird ein besonders günstiges Strömungsverhalten erzielt, das sich weiter vorteilhaft auf den Anlauf des Rotationskörpers auswirkt.

Besonders zweckmässig ist der Durchflussmesser so ausgestaltet, dass der Aussenumfang des Rotationskörpers, aus dem die Wendeln ausgeformt sind, in tangentialer Verlängerung der dem Rotationskörper zugewandten Enden der Wände liegt.

Dadurch wird die Stirnseite des Rotationskörpers selbst nicht mehr nennenswert durch das strömende Medium angeströmt und die Reibung in dem Gegenlager ist deswegen minimal. Die Anströmung des Rotationskörpers erfolgt im wesentlichen nur noch im Bereich der Wendeln, so dass ein grösstmögliches Drehmoment erzeugt wird.

In vorteilhafter Weise bestehen die Wände des Strömungsgleichrichters aus Kunststoff.

Dadurch ist mit verhältnismässig einfachen Mitteln die gewünschte Formgebung – Verdickung der Wände entlang ihrer Länge – herstellbar, insbesondere wenn der Strömungsgleichrichter in einem Kunststoffgiessverfahren hergestellt wird.

Die Erfindung wird im folgenden anhand einer Zeichnung mit zwei Figuren erläutert. Es zeigt:

Fig. 1 den Durchflussmesser in einem Längsschnitt und

Fig. 2 einen Teil des Durchflussmessers, nämlich den Strömungsgleichrichter, in Richtung der Strömung gesehen im Querschnitt.

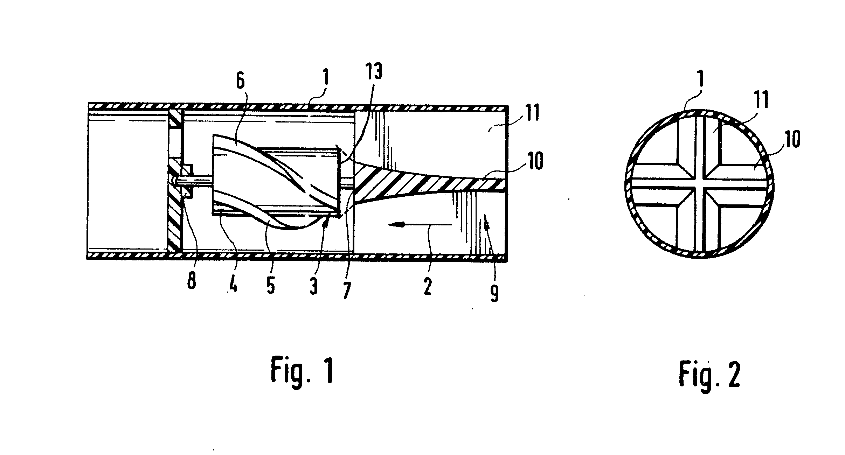

In Fig. 1 ist mit 1 eine Gehäusewand eines als Hohlzylinder geformten Gehäuses bezeichnet, die einen Strömungskanal begrenzt. Der Strömungskanal wird in Richtung des Pfeils 2 von einem strömenden Medium durchflossen. In dem Gehäuse ist ein Rotationskörper 3 gelagert, und zwar koaxial zur nicht dargestellten gedachten Hauptachse des Gehäuses. Der Rotationskörper besteht aus einem zylindrischen Grundkörper 4, an dessen Aussenumfang schraubenlinienförmige Wendeln 5, 6 – weitere Wendeln sind in der Zeichnung nicht sichtbar – ausgeformt sind. Diese Wendeln bilden durch das Medium anströmbare Flügel, die ein Drehmoment an dem Rotationskörper erzeugen.

Der Rotationskörper ist stromaufwärts in einem Lager 7 gelagert. Stromabwärts befindet sich ein Gegenlager 8, das auch zur Aufnahme von Druckkräften, die durch den Rotationskörper auf das Lager ausgeübt werden, geeignet ist.

Stromaufwärts vor dem Rotationskörper ist ein Strömungsgleichrichter 9 angeordnet, der aus zwei sich rechtwinklig kreuzenden Wänden 10, 11 besteht. Die ebenso wie die übrigen Teile des Durchflussmessers aus Kunststoff hergestellten Wände verdicken sich in Richtung des Pfeils 2 bzw. der Strömungsrichtung zunehmend und überproportional. Sie verdicken sich in einem solchen Grad, dass, wie durch eine unterbrochene Linie angedeutet, in tangentialer Verlängerung der dem Rotationskörper zugewandten Enden der Wände der Aussenumfang 12 des Rotationskörpers liegt. Damit wird erreicht, dass im wesentlichen nur die Wendeln 5, 6 angeströmt werden, nicht aber die Stirnseite 13 des Grundkörpers des Rotationskörpers.

Infolge dieser durch die Dimensionierung erfolgende Anströmung des Rotationskörpers beginnt dieser schon bei geringen Durchflussmengen des in Pfeilrichtung 2 strömenden Mediums zu drehen, umso mehr als der auf das Gegenlager ausgeübte Druck sehr klein ist, so dass hier nur eine geringe Haftreibung zu überwinden ist.

Insgesamt zeigt der beschriebene Durchflussmesser auch im Bereich niedriger Durchflüsse ein gutes messtechnisches Verhalten, d.h. eine wenigstens annähernd lineare Beziehung zwischen dem Durchfluss und der Rotationsgeschwindigkeit des Rotationskörpers. Dieses Verhalten wird mit einem kaum nennenswerten zusätzlichen Herstellaufwand erreicht, der lediglich dadurch bedingt ist, dass die Stärke der Wände des Strömungsgleichrichters zunimmt. Dafür kann aber das Gegenlager 8 schwächer dimensioniert werden, das nur geringere Druckkräfte im Vergleich zu herkömmlichen Durchflussmessern aufnehmen muss.

## Patentansprüche

1. Durchflussmesser mit einem Rotationskörper (3), der mindestens eine schraubenlinienförmige Wendel (5, 6) an seinem Aussenumfang aufweist und der in einem Strömungskanal (1) gelagert ist, in dem stromaufwärts zu dem Rotationskörper (3) ein aus in Strömungsrichtung (2) orientierten, im wesentlichen ebenen Wänden (10, 11) bestehender Strömungsgleichrichter (9) angeordnet ist, dadurch gekennzeichnet, dass die Wände (10, 11) des Strömungsgleichrichters (9) zum Rotationskörper (3) hin zunehmend verdickt sind.

2. Durchflussmesser nach Anspruch 1, dadurch gekennzeichnet, dass die Dicke der Wände (10, 11) des Strömungsgleichrichters (9) mit abnehmender Entfernung zum Rotationskörper (3) überproportional zunimmt.

3. Durchflussmesser nach Anspruch 1 oder 2, dadurch gekennzeichnet, dass der Aussenumfang (12) des Rotationskörpers (3), aus dem die Wendeln (5, 6) ausgeformt sind, annähernd in tangentialer Verlängerung der dem Rotationskörper zugewandten Enden der Wände (10, 11) liegt.

4. Durchflussmesser nach den Ansprüchen 1 bis 3, dadurch gekennzeichnet, dass die Wände (10, 11) des Strömungsgleichrichters (9) aus Kunststoff bestehen.

## Claims

1. Flowmeter with a rotation body (3) which has at least one helical spiral (5, 6) on its outer periphery and is mounted in a flow channel (1) in which a flow straightener (9) consisting of essentially plane walls (10, 11) directed in the direction of flow (2) is located upstream of the rotation body (3), characterised in that the walls (10, 11) of the flow straightener (9) are thickened increasingly towards the rotation body (3).

2. Flowmeter according to Claim 1, characterised in that the thickness of the walls (10, 11) of the flow straightener (9) increases superproportionally with decreasing distance from the rotation body (3).

3. Flowmeter according to Claim 1 or 2, characterised in that the outer periphery (12) of the rotation body (3), out of which the spirals (5, 6) are shaped, lies approximately in the tangential prolongation of the ends of the walls (10, 11) facing the rotation body.

4. Flowmeter according to Claims 1 to 3, characterised in that the walls (10, 11) of the flow straightener (9) are made of plastic.

## Revendications

1. Débitmètre comportant un corps rotatif (3), qui présente à sa périphérie au moins une nervure hélicoïdale (5, 6) et qui est logé dans un canal de circulation (1) dans lequel, en amont dudit corps rotatif (3), se trouve un redresseur de débit (9) comportant des parois (11) orientées dans le sens de l'écoulement (2) et essentiellement planes, débitmètre caractérisé par le fait que lesdites parois (10, 11) dudit redresseur (9) s'épaississent graduellement en direction dudit corps rotatif (3).

2. Débitmètre selon la revendication 1, caractérisé par le fait que l'épaisseur des parois (10, 11) du redresseur de débit (9) augmente d'une manière surproportionnelle au fur et à mesure qu'on se rapproche davantage du corps rotatif (3).

3. Débitmètre selon l'une des revendications 1 et 2, caractérisé par le fait que la périphérie (12) du corps rotatif (3), dont les nervures hélicoïdales (5, 6) sont solidaires, se trouve approximativement dans le prolongement tangentiel des extrémités des parois (10, 11) orientées vers ledit corps rotatif.

4. Débitmètre selon l'une quelconque des revendications 1 à 3, caractérisé par le fait que les parois (10, 11) du redresseur de débit (9) sont réalisées en matière plastique.

Fig. 1

Fig. 2